# FASCICULE DE BREVET EUROPEEN

(11) **EP 1 980 003 B1**
(45) Date de publication et mention de la délivrance du brevet: **03.05.2017**
(21) Numéro de dépôt: 07726243.4
(22) Date de dépôt: 29.01.2007
(51) Int. Cl.: H02H 7/085, B60S 1/08

(54) **PROCEDE DE PROTECTION POUR MOTEUR ELECTRIQUE REVERSIBLE**
SCHUTZVERFAHREN FÜR EINEN ELEKTRISCHEN REVERSIERMOTOR
PROTECTION METHOD FOR A REVERSIBLE ELECTRIC MOTOR

(30) Priorité: 31.01.2006 FR 0600873
(43) Date de publication de la demande: 15.10.2008
(73) Titulaire: Valeo Systèmes d'Essuyage, 78322 Le Mesnil Saint Denis (FR)
(72) Inventeur: SOLEILHAC, Michel, F-86130 Dissay (FR)
(74) Mandataire: Léveillé, Christophe
(86) Numéro de dépôt international: PCT/EP2007/050819
(87) Numéro de publication internationale: WO 2007/088147

(56) Documents cités:
- DE-A1- 19 845 674
- FR-A1- 2 736 023
- JP-A- 9 086 346

## Description

La présente invention concerne un procédé destiné à protéger lintégrité d'un moteur électrique réversible en cas d'échauffement.

L'invention trouve une application particulièrement avantageuse, mais non exclusive, dans le domaine des dispositifs d'essuyage pour véhicules automobiles.

Il est connu que le fonctionnement d'un moteur électrique réversible génère de la chaleur. On sait également que tout échauffement excessif a naturellement tendance à entraîner une dégradation des performances de ce type moteur, voire même à causer des disfonctionnements qui peuvent conduire au final à des pannes irréversibles.

Le document FR2736023 décrit un procédé de protection d'un moteur électrique réversible comportant un induit apte à tourner axialement sur lui même entre deux positions angulaires extrémales, la rotation axiale de l'induit subissant une phase de décélération à l'approche de chaque position angulaire extrémale, dont le procédé de protection consiste à: déterminer une grandeur caractéristique de la phase de balayage; comparer cette grandeur caractéristique à une valeur seuil prédéterminée; appliquer un mode de fonctionnement dégradé (petit vitesse) au cas où la grandeur caractéristique serait éloignée de la valeur seuil.

Or dans l'industrie, et pour d'évidentes raisons de rentabilité, un moteur électrique réversible est généralement dimensionné au plus juste en terme de puissance par rapport à l'application envisagée. Cela signifie qu'il est particulièrement important de veiller à ce que le moteur ne soit jamais sollicité exagérément, afin d'éviter qu'il ne s'échauffe au delà d'une température critique à partir de laquelle son intégrité ne serait plus garantie.

Une solution aujourd'hui très répandue pour contrôler la température de fonctionnement d'un moteur électrique réversible, consiste en permanence à détecter les conséquences d'un éventuel échauffement, et le cas échéant à appliquer audit moteur un mode de fonctionnement dégradé nécessitant moins de puissance électrique.

Dans le domaine particulier des systèmes d'essuie-glaces, c'est habituellement le temps de balayage du ou des bras balais associés au moteur électrique réversible, qui constitue le paramètre à surveiller. On sait en effet que ce genre de durée tend à s'accroître lorsque la température du moteur dépasse une valeur seuil donnée qui est fonction de la structure électromécanique intrinsèque dudit moteur. En mesurant une variation du temps de balayage, il est donc possible de repérer indirectement un échauffement excessif du moteur électrique réversible.

Ce type de technique de détection présente toutefois l'inconvénient d'être bien trop imprécis pour pouvoir mettre en évidence tous les phénomènes de surchauffe, et notamment les plus ponctuels. En effet, un temps de balayage constant n'implique pas forcément que le mouvement correspondant s'effectue de manière continue. Cela signifie qu'il peut très bien y avoir ponctuellement des fluctuations de vitesse au cours de cette plage de temps relativement importante, et donc des pics de chaleur à même de remettre en cause l'intégrité du moteur électrique réversible.

Aussi le problème technique à résoudre, par l'objet de la présente invention, est de proposer un procédé de protection d'un moteur électrique réversible comportant un induit à même de tourner axialement sur lui même entre deux positions angulaires extrémales, la rotation axiale de l'induit subissant une phase de décélération à l'approche de chaque position angulaire extrémale, procédé de protection qui permettrait d'éviter les problèmes de l'état de la technique en offrant notamment une efficacité et une simplicité de mise en oeuvre sensiblement améliorées.

La solution au problème technique posé consiste, selon la présente invention, en ce que le procédé de protection consiste à:
- déterminer une grandeur caractéristique de la phase de décélération,
- comparer cette grandeur caractéristique à une valeur seuil prédéterminée,
- appliquer un mode de fonctionnement dégradé au cas où la grandeur caractéristique serait éloignée de la valeur seuil.

A ce stade, on peut préciser que la grandeur caractéristique mesurée peut être indifféremment la vitesse de rotation moyenne de l'induit au cours de la phase de décélération, la position angulaire de l'induit à la fin de la phase de décélération, ou la vitesse de rotation instantanée de l'induit à la fin de la phase de décélération.

Quoi qu'il en soit, il est entendu que le procédé de protection objet de l'invention est parfaitement à même de gérer simultanément plusieurs moteurs électriques réversibles, que ces derniers soient d'ailleurs couplés électriquement entre eux ou pas.

L'invention telle qu'ainsi définie présente l'avantage de concerner une partie limitée mais très distinctive du cycle de rotation alternée de l'induit, à savoir la phase de décélération. Toute variation d'une grandeur caractéristique de cette phase s'avère en effet indubitablement symptomatique d'une élévation excessive de la température de fonctionnement du moteur.

Un autre avantage significatif du procédé de protection objet de l'invention est d'être particulièrement facile à implémenter sous forme logiciel dans le programme de commande d'un moteur électrique réversible, tout en demeurant aussi relativement aisé à mettre en oeuvre avec des moyens purement électroniques.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est par ailleurs donnée en référence aux dessins annexés dans lesquels:
- La figure 1 est un diagramme qui représente une loi de commande d'un moteur électrique réversible conforme à l'invention.
- La figure 2 constitue un diagramme qui illustre quant à lui schématiquement différentes stratégies applicables au mode de fonctionnement dégradé.

L'exemple de réalisation choisi pour illustrer l'invention concerne un dispositif d'essuyage qui est destiné à être monté au niveau d'un pare-brise de véhicule automobile. Ce dispositif d'essuyage est classiquement équipé d'un moteur électrique réversible qui est chargé d'entraîner en déplacement, suivant un mouvement de balayage rotatif alterné, un bras d'actionnement à l'extrémité duquel est couplé un balai d'essuyage.

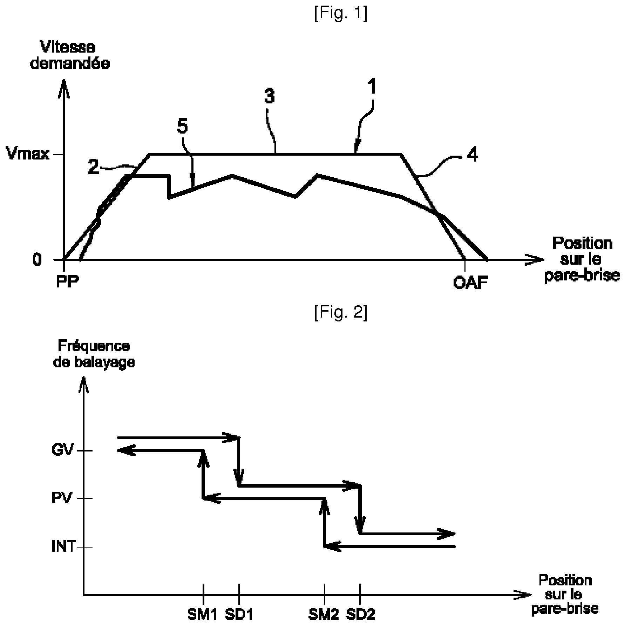

Un moteur électrique réversible est généralement piloté à l'aide d'une loi de commande qui définit la vitesse de rotation de l'induit en fonction de la position angulaire de ce dernier. Dans le cas de l'exemple de réalisation, cela revient à définir la vitesse de balayage du dispositif d'essuyage en fonction de la position du bras balai sur le pare-brise, comme cela apparaît justement sur le diagramme de la figure 1. A cet égard, on peut préciser que dans la pratique, la position du bras balai par rapport au pare-brise est habituellement déterminée en utilisant des moyens électroniques tels que des capteurs de position.

Ainsi qu'on peut le voir sur cette représentation schématique, la loi de commande 1 comprend une phase d'accélération 2, une phase de pleine vitesse 3, ainsi qu'une phase de décélération 4, étant entendu que l'on considère un déplacement entre une position "parking" signalée par la référence PP, et une position "opposé arrêt fixe" désignée par l'abréviation OAF. La référence 5 correspond quant à elle au tracé de la vitesse de rotation effective de l'induit en fonction de sa position angulaire, ou de manière équivalente au tracé de la vitesse de balayage effective du bras balai en fonction de sa position angulaire le long du pare-brise.

Concrètement, le moteur électrique réversible est pourvu d'un induit qui est en mesure de tourner axialement sur lui même entre deux positions angulaires extrémales, correspondant dans le cas présent respectivement à la position parking PP et à la position opposée arrêt fixe OAF. L'ensemble est agencé de manière à ce que la rotation axiale de l'induit subisse une phase de décélération 4 à l'approche de chaque position angulaire extrémale. La vitesse de rotation de l'induit est quant à elle régulée en permanence afin d'atteindre une valeur la plus proche possible de celle demandée, étant donné que le frottement du balai d'essuyage contre le pare-brise a naturellement tendance à faire varier ladite vitesse suivant les conditions d'utilisation réelles du dispositif d'essuyage.

Conformément à l'objet de la présente invention, il est prévu de mettre en oeuvre un procédé de protection à même de préserver l'intégrité du moteur électrique réversible. Cela sous-entend bien entendu que le moteur électrique réversible dispose de moyens de mise en oeuvre spécifiques du procédé de protection en question.

Quoi qu'il en soit, le procédé de protection consiste à:
- déterminer une grandeur caractéristique de la phase de décélération,
- comparer cette grandeur caractéristique à une valeur seuil prédéterminée,
- appliquer un mode de fonctionnement dégradé au cas où la grandeur caractéristique serait éloignée de la valeur seuil.

Plusieurs solutions sont envisageables.

Ainsi donc, selon un premier mode de réalisation de l'invention, le procédé de protection peut tout d'abord consister à:
- déterminer la vitesse de rotation moyenne de l'induit pendant la phase de décélération,
- comparer cette vitesse de rotation moyenne à une valeur seuil prédéterminée,
- appliquer un mode de fonctionnement dégradé au cas où la vitesse de rotation moyenne serait inférieure à la valeur seuil.

Cela signifie en d'autres termes que la grandeur caractéristique de la phase de décélération, qui est prise en compte pour détecter indirectement un éventuel échauffement du moteur, est constituée dans ce premier mode de réalisation par la vitesse de rotation moyenne de l'induit durant uniquement ladite phase de décélération. Mais cela veut également dire que le mode de fonctionnement dégradé sera appliqué en cas de détection d'une vitesse de rotation moyenne insuffisante.

Conformément à un second mode de réalisation de l'invention, le procédé de protection peut également consister à:
- déterminer la position angulaire de l'induit à la fin de la phase de décélération,
- comparer cette position angulaire à une valeur seuil prédéterminée,
- appliquer un mode de fonctionnement dégradé en cas de décalage angulaire supérieur à la valeur seuil.

Cela signifie autrement dit que la grandeur caractéristique de la phase de décélération, qui est prise en considération pour détecter indirectement un éventuel échauffement du moteur, est constituée dans ce second mode de réalisation par la position angulaire de l'induit lorsqu'une position extrémale est atteinte. Mais cela veut également dire que le mode de fonctionnement dégradé sera appliqué en cas de détection d'un décalage angulaire exagéré.

Selon un troisième mode de réalisation de l'invention, le procédé de protection peut enfin consister à:
- déterminer la vitesse de rotation instantanée de l'induit à la fin de la phase de décélération,
- comparer cette vitesse de rotation instantanée à une valeur seuil prédéterminée,
- appliquer un mode de fonctionnement dégradé au cas où la vitesse de rotation instantanée serait supérieure à la valeur seuil.

Cela signifie en d'autres termes que la grandeur caractéristique de la phase de décélération, qui est surveillée pour détecter indirectement un éventuel échauffement du moteur, est constituée dans ce troisième mode de réalisation par la vitesse de rotation instantanée de l'induit à la fin de la phase de décélération. Mais cela veut également dire que le mode de fonctionnement dégradé sera appliqué en cas de détection d'une vitesse de rotation instantanée excessive.

Il est à noter qu'il est parfaitement possible de combiner indifféremment les trois modes de réalisation précédemment décrits, pour détecter un éventuel échauffement du moteur électrique réversible.

Ceci étant dit, une fois la variation d'au moins une grandeur caractéristique de la phase de décélération décelée, il convient d'empêcher que réchauffement correspondant ne vienne altérer l'intégrité du moteur. Pour cela, on procède à l'application d'un mode de fonctionnement dégradé qui nécessite avantageusement sensiblement moins de puissance électrique. Mais là aussi, plusieurs solutions sont envisageables.

Conformément à une première variante de réalisation, le mode de fonctionnement dégradé peut tout d'abord consister à diminuer la vitesse de rotation axiale de l'induit.

Dans le cas d'un dispositif d'essuyage comme dans l'exemple illustrant l'invention, il s'agira avantageusement de passer d'une grande vitesse de balayage GV à une petite vitesse de balayage PV (figure 2).

Selon une seconde variante de réalisation, le mode de fonctionnement dégradé peut également consister à générer une temporisation au niveau d'au moins une des positions extrémales.

Concrètement, cela revient à couper l'alimentation de l'induit pendant un temps donné lorsque ce dernier se trouve dans une position angulaire extrémale, puis à remettre en route dès l'expiration du délai de temporisation. Il est à noter que dans le cas du dispositif d'essuyage de l'invention, la temporisation peut être appliquée indifféremment à la grande GV ou à la petite vitesse de balayage PV (figure 2).

Conformément à une troisième variante de réalisation, l'induit étant en temps normal animé d'un mouvement de rotation intermittent, le mode de fonctionnement dégradé peut consister en un allongement du temps d'intermittence.

Avec le dispositif d'essuyage de l'exemple de réalisation, il s'agira avantageusement de passer d'un intermittent court à un intermittent long.

La figure 2 montre par ailleurs le rôle classique mais essentiel des seuils montants SM1, SM2 et des seuils descendants SD1, SD2 dans la gestion de la fréquence de balayage du bras balai lors de l'application des différents modes de fonctionnement dégradés ; lesdits seuils SM1, SM2, SD1, SD2 étant bien évidemment adaptés à la grandeur caractéristique réellement choisie.

En considérant l'exemple de la figure 2, admettons que la fréquence de balayage du bras balai soit calée sur la grande vitesse GV. Si la vitesse de rotation moyenne du bras au cours de la phase de décélération diminue au point d'atteindre le seuil descendant SD1, alors le procédé de protection commande le passage en petite vitesse PV. Si la vitesse moyenne du bras poursuit encore sa descente jusqu'au seuil descendant SD2, c'est en vitesse intermittente INT que l'on passera.

A contrario, si la vitesse moyenne du bras amorce alors un redressement et qu'elle atteint le seuil montant SM2, le procédé de protection va commander le passage de la vitesse intermittente INT à la petite vitesse PV. Si la remontée se poursuit jusqu'au seuil montant SM1, c'est en grande vitesse GV que l'on repassera.

De manière particulièrement avantageuse, le procédé de protection peut être avantageusement mis en oeuvre par l'intermédiaire de moyens logiciels.

Bien entendu, l'invention concerne également tout moteur électrique réversible doté d'un induit en mesure de tourner axialement sur lui même entre deux positions angulaires extrémales, et comportant en outre des moyens de mise en oeuvre du procédé de protection tel que précédemment décrit.

Plus généralement encore, l'invention est également relative à tout dispositif d'essuyage notamment pour véhicule automobile, et pourvu d'au moins un moteur électrique réversible selon la revendication précédente.

## Revendications

1. Procédé de protection d'un moteur électrique réversible comportant un induit apte à tourner axialement sur lui même entre deux positions angulaires extrémales, la rotation axiale de l'induit subissant une phase de décélération à l'approche de chaque position angulaire extrémale, le procédé de protection consistant à:
- déterminer une grandeur caractéristique de la phase de décélération,
- comparer cette grandeur caractéristique à une valeur seuil prédéterminée,
- appliquer un mode de fonctionnement dégradé au cas où la grandeur caractéristique serait éloignée de la valeur seuil.

2. Procédé de protection selon la revendication 1, **caractérisé en ce qu'**il consiste à:
- déterminer la vitesse de rotation moyenne de l'induit au cours de la phase de décélération,
- comparer cette vitesse de rotation moyenne à une valeur seuil prédéterminée,
- appliquer un mode de fonctionnement dégradé au cas où la vitesse de rotation moyenne serait inférieure à la valeur seuil.

3. Procédé de protection selon l'une des revendications 1 ou 2, **caractérisé en ce qu'**il consiste à:
- déterminer la position angulaire de l'induit à la fin de la phase de décélération,
- comparer cette position angulaire à une valeur seuil prédéterminée,
- appliquer un mode de fonctionnement dégradé en cas de décalage angulaire supérieur à la valeur seuil.

4. Procédé de protection selon l'une quelconque des revendications 1 à 3, **caractérisé en ce qu'**il consiste à:
- déterminer la vitesse de rotation instantanée de l'induit à la fin de la phase de décélération,
- comparer cette vitesse de rotation instantanée à une valeur seuil prédéterminée,
- appliquer un mode de fonctionnement dégradé au cas où la vitesse de rotation instantanée serait supérieure à la valeur seuil.

5. Procédé de protection selon l'une quelconque des revendications 1 à 4, **caractérisé en ce que** le mode de fonctionnement dégradé consiste à diminuer la vitesse de rotation axiale de l'induit.

6. Procédé de protection selon l'une quelconque des revendications 1 à 5, **caractérisé en ce que** le mode de fonctionnement dégradé consiste à générer une temporisation au niveau d'au moins une des positions extrémales.

7. Procédé de protection selon l'une quelconque des revendications 1 à 6, **caractérisé en ce que** le l'induit étant animé d'un mouvement de rotation intermittent, le mode de fonctionnement dégradé consiste à allonger le temps d'intermittence.

8. Procédé de protection selon l'une quelconque des revendications 1 à 7, **caractérisé en ce qu'**il est apte à être mis en oeuvre par l'intermédiaire de moyens logiciels.

9. Moteur électrique réversible doté d'un induit apte à tourner axialement sur lui même entre deux positions angulaires extrémales, **caractérisé en ce qu'**il comporte en outre des moyens de mise en oeuvre du procédé de protection selon l'une quelconque des revendications précédentes.

10. Dispositif d'essuyage notamment pour véhicule automobile, **caractérisé en ce qu'**il comporte au moins un moteur électrique réversible selon la revendication précédente.

## Patentansprüche

1. Schutzverfahren für einen elektrischen Reversiermotor, der einen Anker aufweist, der in der Lage ist, sich axial zwischen zwei äußersten Winkellagen um sich selbst zu drehen, wobei die axiale Drehung des Ankers bei Annäherung an jede äußerste Winkellage eine Verzögerungsphase erfährt, wobei das Schutzverfahren aus Folgendem besteht:
- Bestimmen einer charakteristischen Größe der Verzögerungsphase,
- Vergleichen dieser charakteristischen Größe mit einem vorgegebenen Schwellenwert,
- Anwenden einer eingeschränkten Betriebsart, wenn die charakteristische Größe nicht in der Nähe des Schwellenwerts liegt.

2. Schutzverfahren nach Anspruch 1, **dadurch gekennzeichnet, dass** es aus Folgendem besteht:
- Bestimmen der mittleren Drehzahl des Ankers während der Verzögerungsphase,
- Vergleichen dieser mittleren Drehzahl mit einem vorgegebenen Schwellenwert,
- Anwenden einer eingeschränkten Betriebsart, wenn die mittlere Drehzahl unter dem Schwellenwert liegt.

3. Schutzverfahren nach Anspruch 1 oder 2, **dadurch gekennzeichnet, dass** es aus Folgendem besteht:
- Bestimmen der Winkellage des Ankers am Ende der Verzögerungsphase,
- Vergleichen dieser Winkellage mit einem vorgegebenen Schwellenwert,
- Anwenden einer eingeschränkten Betriebsart bei einem Winkelversatz über dem Schwellenwert.

4. Schutzverfahren nach einem der Ansprüche 1 bis 3, **dadurch gekennzeichnet, dass** es aus Folgendem besteht:
- Bestimmen der Istdrehzahl des Ankers am Ende der Verzögerungsphase,
- Vergleichen dieser Istdrehzahl mit einem vorgegebenen Schwellenwert,
- Anwenden einer eingeschränkten Betriebsart, wenn die Istdrehzahl über dem Schwellenwert liegt.

5. Schutzverfahren nach einem der Ansprüche 1 bis 4, **dadurch gekennzeichnet, dass** die eingeschränkte Betriebsart aus einer Verringerung der Achsdrehzahl des Ankers besteht.

6. Schutzverfahren nach einem der Ansprüche 1 bis 5, **dadurch gekennzeichnet, dass** die eingeschränkte Betriebsart aus einer Erzeugung einer zeitlichen Verzögerung an mindestens einer der äußersten Lagen besteht.

7. Schutzverfahren nach einem der Ansprüche 1 bis 6, **dadurch gekennzeichnet, dass**, da der Anker in eine intermittierende Drehbewegung versetzt wird, die eingeschränkte Betriebsart in einer Verlängerung der Unterbrechungszeit besteht.

8. Schutzverfahren nach einem der Ansprüche 1 bis 7, **dadurch gekennzeichnet, dass** es mit Softwaremitteln umsetzbar ist.

9. Elektrischer Reversiermotor, der mit einem Anker ausgestattet ist, der in der Lage ist, sich axial zwischen zwei äußersten Winkellagen um sich selbst zu drehen, **dadurch gekennzeichnet, dass** er ferner Mittel zum Durchführen des Schutzverfahrens nach einem der vorhergehenden Ansprüche aufweist.

10. Wischvorrichtung, insbesondere für ein Kraftfahrzeug, **dadurch gekennzeichnet, dass** sie mindestens einen elektrischen Reversiermotor nach dem vorhergehenden Anspruch aufweist.

## Claims

1. Method of protecting a reversible electric motor comprising an armature capable of rotating axially about itself between two angular end positions, the axial rotation of the armature undergoing a deceleration phase as each angular end position approaches, the protection method consisting of:
- determining a characteristic value of the deceleration phase,
- comparing this characteristic value to a predetermined threshold value,
- applying a degraded operating mode when the characteristic value is far from the threshold value.

2. Protection method according to claim 1, **characterised in that** it consists of:
- determining the average speed of rotation of the armature during the deceleration phase,
- comparing this average speed of rotation to a predetermined threshold value,
- applying a degraded operating mode when the average speed of rotation is lower than the threshold value.

3. Protection method according to either one of the claims 1 or 2, **characterised in that** it consists of:
- determining the angular position of the armature at the end of the deceleration phase,
- comparing this angular position to a predetermined threshold value,
- applying a degraded operating mode when the angular offset is greater than the threshold value.

4. Protection method according to any one of the claims from 1 to 3, **characterised in that** it consists of:
- determining the momentary speed of rotation of the armature at the end of the deceleration phase,
- comparing this momentary speed of rotation to a predetermined threshold value,
- applying a degraded operating mode when the momentary speed of rotation is higher than the threshold value.

5. Protection method according to any one of the claims from 1 to 4, **characterised in that** the degraded operating mode consists of reducing the axial speed of rotation of the armature.

6. Protection method according to any one of the claims from 1 to 5, **characterised in that** the degraded operating mode consists of generating a time delay in at least one of the angular end positions.

7. Protection method according to any one of the claims from 1 to 6, **characterised in that**, the armature being activated by an intermittent movement of rotation, the degraded operating mode consists of extending the intermittence time.

8. Protection method according to any one of the claims from 1 to 7, **characterised in that** it can be implemented using software means.

9. Reversible electric motor equipped with an armature capable of rotating axially about itself between two angular end positions, **characterised in that** it also comprises means for implementing the protection method according to any preceding claim.

10. Wiping device in particular for a motor vehicle, **characterised in that** it comprises at least one reversible electric motor according to the preceding claim.
